# EUROPEAN PATENT APPLICATION

(11) **EP 3 716 634 A1**
(43) Date of publication of application: **30.09.2020**
(21) Application number: 19739070.1
(22) Date of filing: 07.01.2019
(51) Int. Cl.: H04N 21/435, H04N 21/218, H04N 21/235, H04N 21/262, H04N 21/81, H04N 21/845, H04N 21/854, H04N 21/6587

(54) **METHOD AND DEVICE FOR PROCESSING MEDIA DATA**

(30) Priority: 11.01.2018 CN 201810027139
(71) Applicant: Huawei Technologies Co., Ltd., Longgang Shenzhen, Guangdong 518129 (CN)
(72) Inventor: FAN, Yuqun, Shenzhen, Guangdong 518129 (CN)
(74) Representative: Gill Jennings & Every LLP
(86) International application number: PCT/CN2019/070696
(87) International publication number: WO 2019/137339

(57) **Abstract**

This application provides a media data processing method and apparatus. The method includes: obtaining metadata information, where the metadata information is property information that describes media data, and the metadata information includes viewpoint identification information; and processing the media data based on the viewpoint identification information. In this application, media data corresponding to different viewpoints can be freely processed based on the viewpoint identification information.

## Description

This application claims priority to Chinese Patent Application No. 201810027139.3, filed with Chinese Patent Office on January 11, 2018 and entitled "MEDIA DATA PROCESSING METHOD AND APPARATUS", which is incorporated herein by reference in its entirety.

### TECHNICAL FIELD

This application relates to the field of streaming media transmission technologies, and more specifically, to a media data processing method and apparatus.

### BACKGROUND

The ISO/IEC 23090-2 standard specification is also referred to as an omnidirectional media format (omnidirectional media format, OMAF) standard specification. A media application format is defined in the specification, and the media application format can implement omnidirectional media presentation on an application. Omnidirectional media mainly refers to an omnidirectional video (360-degree video) and related audio. The OMAF specification first specifies a list of projection methods that may be used to convert a spherical video into a two-dimensional video, followed by how to use an ISO base media file format (ISO base media file format, ISOBMFF) to store the omnidirectional media and metadata associated with the media, and how to encapsulate and transmit data of the omnidirectional media in a streaming media system, for example, dynamic adaptive streaming over hypertext transfer protocol (hypertext transfer protocol, HTTP) (dynamic adaptive streaming over HTTP, DASH) or dynamic adaptive streaming specified in the ISO/IEC 23009-1 standard is used.

The ISO base media file format includes a series of boxes (box). One box may further include another box. The boxes include a metadata box and a media data box. The metadata box (moov box) includes metadata, and the media data box (mdat box) includes media data. The metadata box and the media data box may be in a same file, or may be in separate files. If timed metadata is encapsulated by using the ISO base media file format, the metadata box includes a description for a timed metadata, and the media data box includes the timed metadata.

In an existing solution, when media data corresponding to a plurality of viewpoints coexist, the media data of different viewpoints cannot be freely processed.

### SUMMARY

This application provides a media data processing method and apparatus, to freely process media data corresponding to different viewpoints.

According to a first aspect, a media data processing method is provided. The method includes: obtaining metadata information; and processing media data based on viewpoint identification information included in the metadata information.

The metadata information may be some property information that describes the media data, for example, duration, a bit rate, a frame rate, a position in a spherical coordinate system, and the like that are of the media data.

The media data may be omnidirectional media data, and the omnidirectional media data may be video data and/or audio data.

It should be understood that, before the media data is processed based on the viewpoint identification information, the method further includes: obtaining the viewpoint identification information from the metadata information.

The viewpoint identification information may describe a viewpoint corresponding to the media data. Specifically, the viewpoint identification information may indicate a viewpoint ID corresponding to the media data, and the like.

The foregoing viewpoint may be a position at which a camera or a camera array is placed during video shooting.

During video shooting, a single viewpoint or a plurality of viewpoints may be used. For example, one camera or one camera array is corresponding to one viewpoint during video shooting; and when shooting a picture of a scene, a plurality of cameras or a plurality of camera arrays are corresponding to the plurality of viewpoints. Specifically, the camera array that includes the plurality of cameras is usually required for shooting a panoramic video or a 360-degree video.

When a camera is configured to shoot a picture of a scene at a viewpoint, a video at one viewport, videos at a plurality of viewports, a panoramic video, or a 360-degree video may be obtained.

In this application, the viewport is a specific viewing angle selected by a user during video watching. Specifically, when a video watched by the user is a panoramic video or a 360-degree video, the viewport may be an angle between a line of sight of the user and a sphere on which the video is located.

In this application, because the metadata information carries the viewpoint identification information, media data corresponding to different viewpoints can be freely processed based on the viewpoint identification information in the metadata information.

Further, the processing the media data may specifically include presenting the media data. In this case, to-be-presented media data of a viewpoint may be freely selected based on the viewpoint identification information, so that free switching between videos at different viewpoints can be implemented.

In a possible implementation, the media data processing method further includes: obtaining viewpoint selection information; and the processing the media data based on the viewpoint identification information includes: determining a first viewpoint based on the viewpoint selection information and the viewpoint identification information; and processing media data corresponding to the first viewpoint.

The viewpoint selection information may be used to indicate a viewpoint selected by the user. When the foregoing method is executed by a client, the client may obtain viewpoint indication information based on a display screen of the client touched by the user or input of a key operated by the user on the client.

In this application, the client may obtain the viewpoint selection information based on input of the user in an operation interface of the client, and further select and present a viewpoint of a video that the user wants to watch, so that the user can have comparatively good visual experience.

In a possible implementation, before the processing media data corresponding to the first viewpoint, the method further includes: determining whether the media data corresponding to the first viewpoint has been obtained.

Specifically, when the client has downloaded the media data corresponding to the first viewpoint locally, it may be determined that the client has obtained the media data corresponding to the first viewpoint. When the client has not downloaded the media data corresponding to the first viewpoint locally, the client can process the media data only after obtaining the media data corresponding to the first viewpoint from a server end.

It should be understood that, when the client has not obtained the media data corresponding to the first viewpoint, the method further includes: obtaining, based on the viewpoint identification information and the metadata information, the media data corresponding to the first viewpoint.

For example, the server end stores media data corresponding to the first viewpoint, a second viewpoint, and a third viewpoint in total. In this case, the client may request, from the server end, to obtain a bitstream of the media data corresponding to the first viewpoint, and obtain, by parsing the bitstream, the media data corresponding to the first viewpoint. For a specific manner of obtaining the media data, refer to related regulations in standards such as the MPEG-DASH. Details are not described herein.

In a possible implementation, the processing media data corresponding to the first viewpoint specifically includes: presenting the media data corresponding to the first viewpoint.

In a possible implementation, a form of the metadata information may include a metadata track, a media presentation description (media presentation description, MPD), and supplemental enhancement information (supplemental enhancement information, SEI). The viewpoint identification information may be carried in the information. Therefore, the viewpoint identification information may be obtained by parsing the metadata track, the MPD, and the SEI.

Therefore, in this application, when the viewpoint identification information is obtained after the metadata information is obtained, the metadata track is obtained, and the viewpoint identification information may be obtained from the metadata track; or the MPD or the SEI is obtained, and the viewpoint identification information may be obtained from the MPD or the SEI.

In a possible implementation, the metadata information may further include viewpoint position information, and the viewpoint position is used to indicate a position of a viewpoint in the spherical coordinate system.

The viewpoint position information may indicate a position of a viewpoint to which media data corresponding to current metadata information belongs, or may indicate a position of a viewpoint to which other media data other than the media data corresponding to the current metadata information belongs.

Specifically, when the position of the viewpoint to which the media data corresponding to the metadata information belongs is a viewpoint 1, the viewpoint position information in the metadata information may indicate a position of a viewpoint 2 in a sphere region in which video data of the viewpoint 1 is located. The viewpoint 2 may be a viewpoint with some viewports overlapping with the viewpoint 1.

In a possible implementation, the form of the metadata information may include a timed metadata track, box information, the MPD, and the SEI. The foregoing viewpoint position information may be carried in the information. Therefore, the viewpoint position information may be obtained by parsing the metadata track, the MPD, and the SEI.

Therefore, in this application, when the viewpoint position information is obtained after the metadata information is obtained, the timed metadata track, the box information, the MPD, and the SEI are obtained, and the viewpoint position information is obtained from the timed metadata track, the box information, the MPD, and the SEI.

It may be understood that the viewpoint position information and the viewpoint identification information may be stored in same metadata information, or may be stored in different metadata information. For example, the viewpoint identification information may be obtained based on the metadata track, and the viewpoint position information may be obtained based on the MPD file.

In this application, positions of different viewpoints can be flexibly indicated based on the viewpoint position information, so that the user can perform flexible switching between different viewpoints during video watching.

In a possible implementation, a specific form of the foregoing metadata information may be a metadata track. The viewpoint identification information and director viewport information are carried in the metadata track. In this case, the processing the media data based on the viewpoint identification information includes: processing the media data based on the viewpoint identification information and the director viewport information.

The director viewport information may indicate a viewport recommended by a video producer or a director. The client may present, to the user based on the director viewport information, media content that the video producer or the director wants to present to the user. Because the metadata track further includes the viewpoint identification information, the client may present video content of at least one viewpoint within a director viewport range to the user, so that the user can select a video at one viewpoint from the at least one viewpoint within the director viewport range to watch.

In this application, because the metadata track further includes the viewpoint identification information in addition to the director viewport information, the user can select a video at a corresponding viewpoint within the director viewport range to watch. In this application, the user can perform free switching between different viewpoints within the director viewport range.

According to a second aspect, a media data processing apparatus is provided. The apparatus includes: an obtaining module, configured to obtain metadata information, where the metadata information is property information that describes media data, and the metadata information includes viewpoint identification information; and a processing module, configured to process the media data based on the viewpoint identification information.

In a possible implementation, the obtaining module is further configured to obtain viewpoint selection information; and the processing module is specifically configured to: determine a first viewpoint based on the viewpoint selection information and the viewpoint identification information; and process media data corresponding to the first viewpoint.

In a possible implementation, the processing module is specifically configured to present the media data corresponding to the first viewpoint.

In a possible implementation, before the processing module processes the media data corresponding to the first viewpoint, the processing module is further configured to obtain, based on the viewpoint identification information and the metadata information, the media data corresponding to the first viewpoint.

In a possible implementation, the metadata information further includes viewpoint position information, and the viewpoint position information is used to indicate a position of a viewpoint in a spherical coordinate system.

In a possible implementation, the metadata information includes box information, and the box information includes the viewpoint position information.

In a possible implementation, the metadata information is a metadata track.

In a possible implementation, the metadata information is a media presentation description.

In a possible implementation, the metadata information is supplemental enhancement information.

In a possible implementation, the metadata information is a metadata track, and the metadata track further includes director viewport information; and the processing module is specifically configured to process the media data based on the viewpoint identification information and the director viewport information.

According to a third aspect, a computer-readable storage medium is provided. The computer-readable storage medium stores an instruction. When the instruction is run on a computer, the computer is enabled to execute the method described in the foregoing first aspect.

According to a fourth aspect, a computer program product including an instruction is provided. When the instruction is run on a computer, the computer is enabled to execute the method described in the foregoing first aspect.

According to a fifth aspect, an electronic device is provided, including the media data processing apparatus according to the foregoing second aspect.

It should be understood that for beneficial effects achieved in the second to the fifth aspects and the corresponding implementations of this application, refer to beneficial effects achieved in the first aspect and the corresponding implementations of this application. Details are not described again.

### BRIEF DESCRIPTION OF DRAWINGS

FIG. 1 is a schematic diagram of a possible application scenario according to an embodiment of this application;
FIG. 2 is a schematic diagram of a possible application scenario according to an embodiment of this application;
FIG. 3 is a schematic flowchart of a media data processing method according to an embodiment of this application;
FIG. 4 is a flowchart of a media data processing method according to an embodiment of this application;
FIG. 5 is a flowchart of a media data processing method according to an embodiment of this application;
FIG. 6 is a flowchart of a media data processing method according to an embodiment of this application;
FIG. 7 is a schematic block diagram of a media data processing apparatus according to an embodiment of this application; and
FIG. 8 is a schematic structural diagram of hardware of a media data processing apparatus according to an embodiment of this application.

### DESCRIPTION OF EMBODIMENTS

The following describes technical solutions of this application with reference to the accompanying drawings.

For better understanding of a media data processing method in the embodiments of this application, the following briefly describes some basic concepts related to media data first.

A track (track) is a series of timed samples that are encapsulated in an ISO base media file format (ISO base media file format, ISOBMFF). For example, for a video track, a video sample is obtained by encapsulating, according to a specification of the ISOBMFF, a bitstream that is generated after a video encoder encodes each frame.

In the ISO/IEC 14496-12 standard, the track is defined as a "timed sequence of related samples (q.v.) in an ISO base media file", and Chinese translation of the definition is "a timed sequence of related samples (q.v.) in an ISO base media file".

For media data, a track is an image or an audio sample sequence. For a hint track, one track corresponds to one stream channel (For media data, a track corresponds to a sequence of images or sampled audio; for hint tracks, a track corresponds to a streaming channel).

The ISOBMFF file includes a plurality of boxes (box), where one box may include another box.

The box is defined in the ISO/IEC 14496-12 standard as an "object-oriented building block defined by using a unique type identifier and length", and Chinese translation of the definition is "an object-oriented building block defined by using a unique type identifier and length".

In addition, the box is called an "atom" in some specifications, including the first definition of MP4 (Called "atom" in some specifications, including the first definition of MP4).

Supplemental enhancement information (supplementary enhancement information, SEI) is a type of a network access unit (network access unit, NAU) defined in the video coding and decoding standards H.264 and H.265 released by the international telecommunication union (international telecommunication union, ITU).

A media presentation description (Media presentation description, MPD) is a file specified in the ISO/IEC 23009-1 standard. The file includes metadata for constructing an HTTP-URL by a client. The MPD includes one or more period (period) elements. Each period element includes one or more adaptation sets (adaptation set). Each adaptation set includes one or more representations (representation). Each representation includes one or more segments. The client selects the representation based on information in the MPD, and constructs an HTTP-URL of the segment.

To describe time-related property information of media data, a timed metadata track (timed metadata track) of a sphere region (region) is specified in the OMAF standard. A box of metadata in the metadata track includes metadata that describes a sphere. The box of the metadata describes a purpose of the timed metadata track, that is, what the sphere region is used for. Two types of timed metadata tracks are described in the OMAF standard: a recommended viewport metadata track (the recommended viewport timed metadata track) and an initial viewpoint track (the initial viewpoint timed metadata track). The recommended viewport track describes a region of a viewport recommended to a terminal for presentation, and the initial viewpoint track describes an initial presentation direction during omnidirectional video watching.

A format that is of a sample entry (Sample Entry) of the sphere region and that is specified in an existing OMAF standard is as follows:

```
           class SphereRegionSampleEntry(type) extends MetaDataSampleEntry(type)
           {
           SphereRegionConfigBox( ); // mandatory
          Box[ ] other boxes; // optional
           }
           class SphereRegionConfigBox extends FullBox('rosc', version = 0, flags)
           {
          unsigned int(8) shape_type;
          bit(7) reserved = 0;
          unsigned int(1) dynamic_range_flag;
             if (dynamic _range_flag == 0)
                 {
          unsigned int(32) static_azimuth_range;
          unsigned int(32) static_elevation_range;
            }
          unsigned int(8) num_regions;
           }
```

Semantics of fields in the foregoing sample entry of the sphere region are as follows:
shape_type is used to describe a shape type of the sphere region;
reserved is a reserved field;
when dynamic_range_flag is 0, a horizontal range and a vertical range that are of the region remain unchanged, and when dynamic range flag is 1, an azimuth coverage range and an elevation coverage range of the region are described in the sample;
static_azimuth_range indicates an azimuth coverage range of the region;
static_elevation_range indicates an elevation coverage range of the region; and
num_regions indicates a quantity of regions in a metadata track.

Two types of shapes of sphere regions are defined in the OMAF. One is that four circles (Azimuth Circle) are combined to form a shape, and a value of shape_type is 0. The other is that two large circles and two small circles (Elevation Circle) are combined to form a shape, and a value of shape_type is 1.

A format that is of a sample (Sample) of the sphere region and that is specified in the existing OMAF standard is as follows:

```
           aligned(8) SphereRegionStruct(range_included_flag)
           {
            signed int(32) center_azimuth;
            signed int(32) center_elevation;
            singed int(32) center_tilt;
              if (range_included _flag)
                 {
             unsigned int(32) azimuth_range;
             unsigned int(32) elevation_range;
              }
              unsigned int(1) interpolate;
              bit(7) reserved = 0;
           }
           aligned(8) SphereRegionSample()
           {
               for(i=0;i<num_regions;i++)
           }SphereRegion Struct(dynamic_range_flag)
```

Semantics of fields in the foregoing sample of the sphere region are as follows:
center_azimuth and center_elevation indicate a position of a center point of the sphere region;
center_tilt indicates a tilt angle of the region;
azimuth_range indicates an azimuth coverage range of the region; and
elevation_range indicates an elevation coverage range of the region.

A multi-viewpoint shooting may be used during video shooting, to perform free switching between different viewports during video playing. A feature of the multi-viewpoint shooting is that a plurality of viewpoints record videos at the same time, and the videos at different viewports are played by switching between different viewpoints.

For example, a total of two viewpoints, a viewpoint A and a viewpoint B, are used in a video shooting process. In this case, in shot videos, when the viewpoint A appears in a specific region in a 360-degree panoramic video shot by the viewpoint B, the sphere region structure may be used to define a position of the viewpoint A at the viewpoint B. However, a 360-degree panoramic video shot by the viewpoint A may be indicated by using a uniform resource identifier (Uniform Resource Identifier, URI) link. When watching the video shot by the viewpoint B, the user may switch to the video shot by the viewpoint A by using a URI link associated with the viewpoint A.

Specifically, the following syntax may be used to define, in the sphere region structure, a position of one viewpoint at the other viewpoint.

A sample syntax:

```
           class HotspotSample( ) extends SphereRegionSample
           {
           }string hotspot_uri;
```

The syntax defines, based on a hotspot_uri field, a URI associated with the sphere region points to a 360-degree panoramic video link of the other viewpoint.

In the foregoing manner, because the URI is an out-of-band link, whether the two viewpoints belong to shooting of a same scene (or event) cannot be distinguished, and the URI is easily modified or redirected in a network transmission process. Therefore, a video related to a viewpoint cannot be stably expressed by using the URI.

Therefore, this application provides the media data processing method. Viewpoint identification information is carried in metadata information of the media data to indicate a viewpoint corresponding to the media data, so that the media data can be processed (for example, presented) based on the viewpoint. In this way, videos at different viewpoints can be displayed to the user more flexibly.

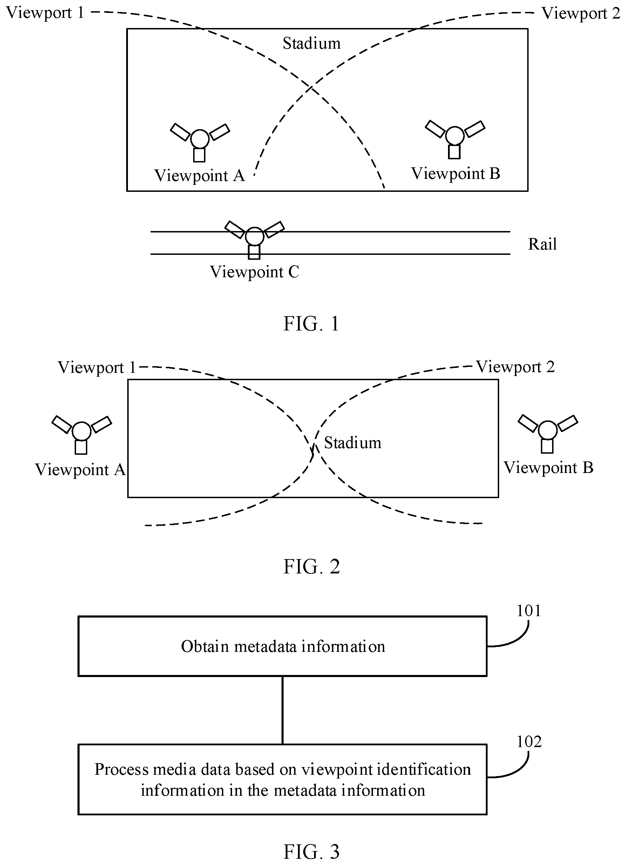

FIG. 1 is a schematic diagram of a possible application scenario according to an embodiment of this application.

As shown in FIG. 1, a viewpoint A, a viewpoint B, and a viewpoint C are disposed in a stadium to shoot videos. Positions of the viewpoint A and the viewpoint B are fixed, and the viewpoint C is located on a rail, and a position of the viewpoint C may change at any time. A camera is separately placed at the viewpoint A, the viewpoint B, and the viewpoint C, to shoot a 360-degree panoramic video. A viewport in which the viewpoint A shoots a video is a viewport 1, and a viewport in which the viewpoint B shoots a video is a viewport 2. The viewport 1 is partially overlapped with the viewport 2. Therefore, the viewpoint B can be observed in some regions of the video shot at the viewpoint A, and the viewpoint A can be observed in some regions of the video shot at the viewpoint B.

FIG. 2 shows another possible application scenario according to an embodiment of this application. In FIG. 2, a viewpoint A and a viewpoint B are disposed in a stadium, and the viewpoint A and the viewpoint B are respectively fixed at two ends of the stadium. A viewport in which the viewpoint A shoots a video is a viewport 1, and a viewport in which the viewpoint B shoots a video is a viewport 2. The viewport 1 is not overlapped with the viewport 2. Because the viewport in which the viewpoint A shoots the video is not overlapped with the viewport in which the viewpoint B shoots the video, another viewpoint cannot be observed in regions in videos that are shot at the viewpoint A and the viewpoint B respectively.

It should be understood that FIG. 1 and FIG. 2 show a multi-viewpoint video shooting scenario only by using the stadium as an example. Essentially, there are still many multi-viewpoint video shooting scenarios. For example, a television program is produced by using a multi-viewpoint shooting, and an evening party program is shot by using the multi-viewpoint shooting. Any scenario in which the multi-viewpoint shooting is used falls within the scope of this application.

FIG. 3 is a schematic flowchart of a media data processing method according to this application. The method shown in FIG. 3 may be executed by a decoding device. The decoding device herein may be specifically a video decoder, a device having a video decoding function, a video player (for example, an electronic device that can process multimedia data), or the like. The method shown in FIG. 3 includes steps 101 and 102. The following describes steps 101 and 102 in detail with reference to specific examples.

101. Obtain metadata information.

The metadata information may be some property information that describes media data. For example, the metadata information may include information such as duration, a bit rate, a frame rate, a position in a spherical coordinate system, and the like that are of the media data.

In addition, the media data described by the metadata information may be omnidirectional media data, and the omnidirectional media data may be video data and/or audio data.

102. Process the media data based on viewpoint identification information in the metadata information.

The viewpoint identification information may be carried in the metadata information, and the viewpoint identification information is used to indicate a viewpoint. For example, the metadata information of first media data includes first viewpoint identification information, and the first viewpoint identification information indicates a first viewpoint. In this case, the first media data is media data shot at the first viewpoint.

In addition, before the media data is processed based on the viewpoint identification information in the step 102, the viewpoint identification information carried in the metadata may be first obtained from the metadata.

Optionally, the viewpoint identification information may be specifically a viewpoint ID. Each viewpoint is corresponding to one ID, and different IDs are used to indicate different viewpoints.

In this application, because the metadata information carries the viewpoint identification information, media data corresponding to different viewpoints can be freely processed based on the viewpoint identification information in the metadata information.

Further, the processing the media data may specifically include presenting the media data. In this case, to-be-presented media data of a viewpoint may be freely selected based on the viewpoint identification information, so that free switching between videos at different viewpoints can be implemented.

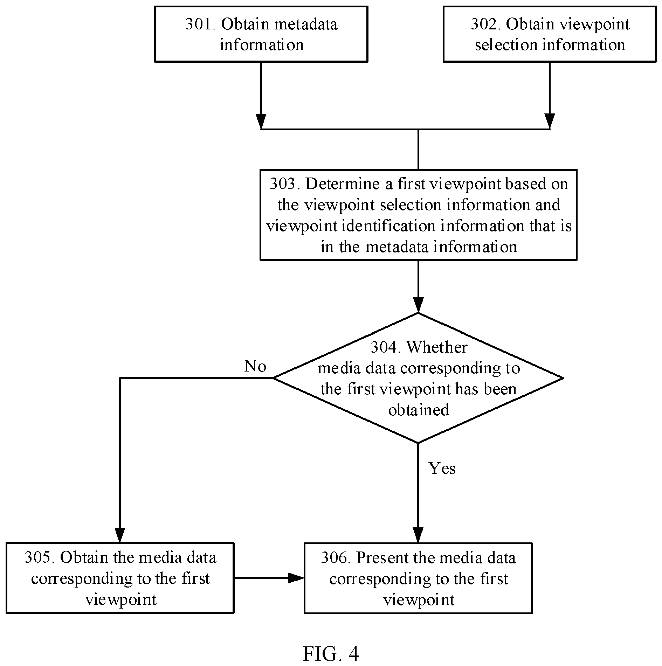

FIG. 4 is a flowchart of a media data processing method according to this application. Same as the method shown in FIG. 3, the method shown in FIG. 4 may also be executed by a decoding device.

The method shown in FIG. 4 includes steps 301 to 306. The following describes steps 301 to 306 in detail.

301. Obtain metadata information.

The metadata information obtained in the step 301 is the same as the metadata information obtained in the step 101, and also describes some property information of the media data. In addition, viewpoint identification information may be carried in the metadata information obtained in the step 301, and the viewpoint identification information is used to indicate a viewpoint.

302. Obtaining viewpoint selection information.

The viewpoint selection information may be used to indicate a viewpoint selected by a user for watching. For example, when the method shown in FIG. 4 is executed by a terminal device, the user may input the viewpoint selection information in an operation interface of the terminal device, to select a viewport of a video that the user wants to watch.

Optionally, before the step 302, the method shown in FIG. 4 further includes: presenting different viewpoints.

When observing the presented different viewpoints, the user may select, from the different viewpoints based on a demand for watching the video, a target viewpoint for watching the video, and generate the viewpoint selection information by operating a display interface.

303. Determine a first viewpoint based on the viewpoint selection information and the viewpoint identification information that is in the metadata information.

Specifically, when the method shown in FIG. 4 is executed by the terminal device, the terminal device may present different viewpoint icons (the viewpoint icons are corresponding to different viewpoint identification information) in the display interface for the user to select. The user may tap the to-be-watched viewpoint based on the demand (the tapping operation of the user herein is equivalent to the viewpoint selection information described above). Then, the device may present the video at the viewpoint selected by the user.

304. Determine whether media data corresponding to the first viewpoint has been obtained.

When it is determined in the step 304 that the media data corresponding to the first viewpoint has been obtained, step 306 is directly performed. However, if it is determined in the step 304 that the media data corresponding to the first viewpoint has not been obtained, the media data corresponding to the first viewpoint needs to be obtained first, that is, step 305 is performed.

It should be understood that, that the media data corresponding to the first viewpoint has been obtained may mean that a client has downloaded the media data corresponding to the first viewpoint locally. That the media data corresponding to the first viewpoint has not been obtained may mean that only metadata information of the media data corresponding to the first viewpoint is obtained, but the media data corresponding to the first viewpoint has not been locally stored. In this case, the media data corresponding to the first viewpoint needs to be continuously obtained from a server end.

305. Obtain the media data corresponding to the first viewpoint.

Specifically, when the media data corresponding to the first viewpoint is obtained, a bitstream of the media data corresponding to the first viewpoint may be obtained from the server end based on the metadata information of the media data corresponding to the first viewpoint, and the bitstream of the media data corresponding to the first viewpoint is parsed, to obtain the media data corresponding to the first viewpoint.

306. Present the media data corresponding to the first viewpoint.

For example, when the media data corresponding to the first viewpoint is video data and the method shown in FIG. 4 is executed by the terminal device, a video corresponding to the first viewpoint may be displayed on a display screen of the terminal device. In this way, the user can watch the video corresponding to the first viewpoint by using the display screen.

Optionally, the viewpoint identification information may be carried in metadata information in different forms.

Specifically, the viewpoint identification information may be carried in a metadata track, an MPD, and an SEI.

When the viewpoint identification information is carried in the metadata track, the obtaining metadata information may specifically include: obtaining the metadata track, where the metadata track includes the viewpoint identification information.

When the viewpoint identification information is carried in the MPD, the obtaining metadata information may specifically include: obtaining the MPD, where the MPD includes the viewpoint identification information.

When the viewpoint identification information is carried in the SEI, the obtaining metadata information may specifically include: obtaining the SEI, where the SEI includes the viewpoint identification information.

Because the metadata track, the MPD, and the SEI include the viewpoint identification information, the viewpoint can be determined by parsing the metadata track, the MPD, and the SEI.

The following describes in detail, with reference to examples 1 to 3, that the viewpoint identification information is separately carried in the metadata track, the MPD, and the SEI.

It should be understood that, in this embodiment of this application, in addition to the semantics mentioned in the following example, for other semantics included in the MPD, refer to explanations related to the MPD semantics in standards such as the OMFA and the MPEG-DASH.

Example 1: Viewpoint identification information is carried in a metadata track.

In example 1, a plurality of video streams (tracks) belonging to a same viewpoint may be combined into one group, and one piece of the viewpoint identification information (which may be specifically a viewpoint ID) is allocated to groups of a plurality of video streams belonging to different viewpoints. A client presents the viewpoint ID to a user after obtaining the group of the video streams of the viewpoint through parsing, and the user may select a to-be-watched viewpoint based on the viewpoint ID.

A group type box (TrackGroupTypeBox) is defined based on a box in a metadata track in an existing standard, and syntax included in TrackGroupTypeBox is specifically as follows:

```
               aligned(8) class TrackGroupTypeBox(unsigned int(32)
               track_group_type) extends FullBox(track_group_type, version=0, flags = 0)
                  {
             unsigned int(32) track_group_id;
                  }
```

Semantics indicated by the foregoing syntax are as follows:
track_group_type indicates the group type; and
track_group_id indicates that tracks of a same type and ID belong to a same group.

In example 1, a group type box (ViewPositionGroupBox) is newly added to the metadata track. The box inherits from TrackGroupTypeBox, and syntax for the newly added group type box is as follows:
aligned(8) class ViewPositionGroupBox extends TrackGroupTypeBox('vipo') { }

After obtaining the type box, the client may obtain track_group_id in the box by parsing the type box, and then present different viewpoints to the user, and for the user to freely select.

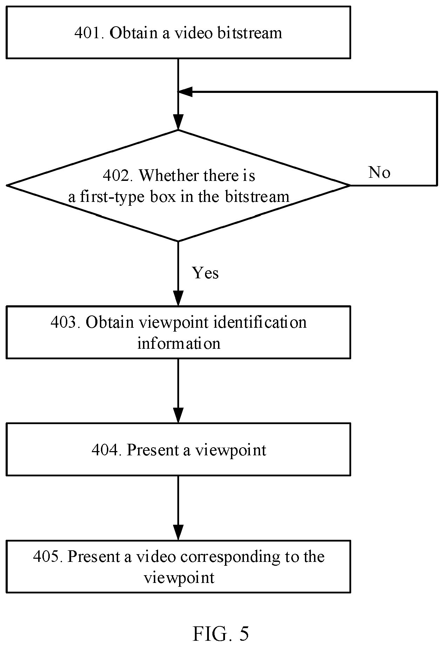

FIG. 5 is a flowchart of a media data processing method according to this application. A specific process in which the client processes the type box may be shown in FIG. 5.

401. Obtain a video bitstream.

402. Parse the video bitstream, and determine whether there a specific type box.

Specifically, after the video bitstream is obtained, TrackGroupTypeBox whose type is 'vipo' is searched for and parsed.

403. Obtain the viewpoint identification information.

When there is TrackGroupTypeBox whose type is 'vipo', track_group_id in TrackGroupTypeBox is obtained, that is, the viewpoint identification information is obtained.

404. Present the viewpoint to the user.

Specifically, when a plurality of pieces of viewpoint identification information are obtained through parsing, viewpoints indicated by the plurality of pieces of viewpoint identification information may be presented in the display interface of the device in a form of an icon. For example, when three viewpoints are determined based on the viewpoint identification information, icons of the three viewpoints may be displayed in the display interface of the device. The user may select a video at a corresponding viewpoint by using a display screen to watch. For example, the user may select the viewpoint by clicking the viewpoint icon.

405. Present the video corresponding to the viewpoint selected by the user.

For example, charts of a total of the first viewpoint, a second viewpoint, and a third viewpoint are displayed in the display interface. When the user taps the first viewpoint, the device may present, in the display interface, the video corresponding to the first viewpoint for the user to watch.

It should be understood that 'vipo' described above indicates that a group type of a track group is a same-viewpoint group type, and not that the viewpoint identification information is carried in the box. It should be understood that the four characters 'vipo' are used herein to indicate a same-viewpoint group type, or any other characters such as 'aabb' may be used to indicate the same-viewpoint group type. A specific used character is not limited in this application.

To ensure that track_group_id of different viewpoints is different, flags of ViewPositonGroupBox may be marked as 1, to indicate that track_group_id of different viewpoints is different. A definition of the box is as follows:
aligned(8) class ViewPositionGroupBox extends TrackGroupTypeBox('vipo', version=0, flags = 1) { }

Example 2: Viewpoint identification information is carried in an MPD.

When the viewpoint identification information is carried in the MPD, specifically, an attribute @viewPositionSetId may be added to an adaptation set level field of the MPD to indicate a viewpoint to which the adaptation set belongs. A specific definition of @viewPositionSetId is shown in Table 1.

**Table 1**

| @viewPositionSetId | Use (Use) | Description (Description) |
|---|---|---|
| | O | A non-negative integer in the decimal system may be used to provide an identifier for tracks that is in a track group and that belong to a same viewpoint. (Optional non-negative integer in decimal representation, providing the identifier for a group of adaptation sets carrying tracks belonging to the same viewing position track group) |

In Table 1, O indicates that the field is optional, and is not a mandatory field. In addition, it should be understood that adaptation sets that have a same value of @viewPositionSetId belong to a same viewpoint, and adaptation sets that have different values of @viewPositionSetId belong to different viewpoints.

In a possible implementation, when the viewpoint identification information and viewpoint indication information are carried in the MPD, syntax included in the MPD is specifically as follows:

```
           <?xml version=" 1.0" encoding="UTF-8"?>
           <MPD
             xmlns="urn:mpeg:dash:schema:mpd:2011"
             type="static"
             mediaPresentationDuration="PT10S"
             minBufferTime="PT1S"
             profiles="urn:mpeg:dash:profile:isoff-on-demand:2011">
 
             <Period>
               <!-viewPosition 1, Tile 1 -->
               <AdaptationSet segmentAlignment="true"
 subsegmentAlignment="true" subsegmentStartsWithSAP="1" viewPositionSetId = "1">
                  <EssentialProperty schemeIdUri="urn:mpeg:dash:srd:2014"
 value="0,0,0,960,1080,3840,2160"/>
                  <Representation mimeType="video/mp4" codecs="avc1.42c00d"
 width="960" height=" 1080" bandwidth="79707" startWithSAP="1">
                    <EssentialProperty schemeIdUri="urn:mpeg:mpegB:cicp:PF"
 value="0"/>
                    <BaseURL> tile1.mp4</BaseURL>
                    <SegmentBase indexRangeExact="true" indexRange="837-
 988"/>
                  </Representation>
               </ AdaptationSet>
 
               <!-- viewPosition 1,Tile 2 -->
               <AdaptationSet segmentAlignment="true"
 subsegmentAlignment="true" subsegmentStartsWithSAP="1" viewPositionSetId = "1">
                  <EssentialProperty schemeIdUri="urn:mpeg:dash:srd:2014"
 value="0,960,0,960,1080,3840,2160"/>
                  <Representation mimeType="video/mp4" codecs="avc1.42c00d"
 width="640" height="720" bandwidth="79707" startWithSAP="1">
                    <EssentialProperty schemeIdUri="urn:mpeg:mpegB:cicp:PF"
 value="0"/>
                    <BaseURL> tile2.mp4</BaseURL>
                    <SegmentBase indexRangeExact="true" indexRange="837-
 988"/>
                  </Representation>
               </AdaptationSet>
 
               <!-viewPosition 2, Tile 1 -->
               <AdaptationSet segmentAlignment="true"
 subsegmentAlignment="true" subsegmentStartsWithSAP="1" viewPositionSetId = "2">
                  <EssentialProperty schemeIdUri="urn:mpeg:dash:srd:2014"
 value="0,0,0,960,1080,3840,2160"/>
                  <Representation mimeType="video/mp4" codecs="avc1.42c00d"
 width="960" height=" 1080" bandwidth="79707" startWithSAP="1">
                    <EssentialProperty schemeIdUri="urn:mpeg:mpegB:cicp:PF"
 value="0"/>
                    <BaseURL> tile1.mp4</BaseURL>
                    <SegmentBase indexRangeExact="true" indexRange="837-
 988"/>
                  </Representation>
               </AdaptationSet>
               <!-- viewPosition 2,Tile 2 -->
               <AdaptationSet segmentAlignment="true"
 subsegmentAlignment="true" subsegmentStartsWithSAP="1" viewPositionSetId = "2">
                  <EssentialProperty schemeIdUri="urn:mpeg:dash:srd:2014"
 value="0,960,0,960,1080,3840,2160"/>
                  <Representation mimeType="video/mp4" codecs="avc1.42c00d"
 width="640" height="720" bandwidth="79707" startWithSAP="1">
                    <EssentialProperty schemeIdUri="urn:mpeg:mpegB:cicp:PF"
 value="0"/>
                    <BaseURL> tile2.mp4</BaseURL>
                    <SegmentBase indexRangeExact="true" indexRange="837-
 988"/>
                  </Representation>
               </AdaptationSet>
             </Period>
           </MPD>
```

In the foregoing syntax included in the MPD, when viewPositionSetId is equal to "1", a viewpoint 1 is indicated, and when viewPositionSetId is equal to "2", a viewpoint 2 is indicated. The viewpoint 1 and the viewpoint 2 each have two tracks, and the two tracks may be respectively referred to as tile 1 and tile 2.

After obtaining the MPD file, a client may parse a property that is at an adaptation set level and that is in the MPD file to obtain a value of the property viewPositionSetId.

Next, the client may present the viewpoint information obtained based on the property viewPositionSetId to a user, and the user may select a specific viewpoint to watch. After the user selects the viewpoint to watch, the client may present a video corresponding to the viewpoint to the user. When watching the video, the user may freely select, based on the viewpoint information presented by the client, videos of different viewpoints to watch at any time.

Example 3: Viewpoint identification information is carried in an SEI.

In a possible implementation, syntax for the viewpoint identification information carried in the SEI is as follows:

```
           sei_payload(payloadType, payloadSize)
           {
                  if(payloadType = = VIP)
                    View_position_payload(payloadSize)
           }
```

VIP in the foregoing syntax is a specific value. For example, when VIP is 190, it indicates that the viewpoint identification information is carried in a source_payload field in the SEI. Syntax included in source_payload is specifically as follows:

```
           source_payload(payloadSize)
           {
           View_position_id
           }
```

It should be understood that source_payload is View_position_payload, and source_payload indicates content in specific payload.

View_position_id describes information about a viewpoint ID to which a bitstream corresponding to the SEI belongs.

In addition, it should be understood that a value of VIP is not limited in this application. When set to a specific value, VIP may be used to indicate that the viewpoint identification information in carried in the source_payload field in the SEI.

In example 3, after a client obtains a video bitstream, a specific processing procedure is as follows:
(1) The client obtains the video bitstream, parses NALU header information in the bitstream, and if a header information type obtained through parsing is an SEI type, the client parses an SEI NALU to obtain a payload type of the SEI.
(2) If the payload type (payloadType) of the SEI obtained by the client through parsing is 190, it indicates that bitstream viewpoint information is carried in the SEI, and the client continues to parse the payload to obtain View_position_id information and obtain a viewpoint ID.
(3) The client presents, to a user, viewpoint IDs corresponding to different values of View_position_id.
(4) The user selects a specific viewpoint to watch, and the client presents a video at the viewpoint to the customer.

It should be understood that, in the foregoing processes (1) to (4), the customer may freely select, based on the viewpoint IDs presented by the client, videos of different viewpoints to watch.

Optionally, as an embodiment, the metadata information further includes viewpoint position information, and the viewpoint position information is used to indicate a position of a viewpoint in a spherical coordinate system.

In this application, positions of different viewpoints can be flexibly indicated based on the viewpoint position information, so that the user can perform flexible switching between different viewpoints during video watching.

It should be understood that, in this application, the viewpoint identification information may indicate the viewpoint ID or the viewpoint ID, and the viewpoint position information may be used to indicate the position of the viewpoint in the spherical coordinate system. In other words, the viewpoint ID is indicated based on a piece of information, and the position of the viewpoint is indicated by another piece of information.

Optionally, the viewpoint position information included in the metadata information may specifically indicate a position of another viewpoint other than a viewpoint corresponding to the metadata information.

It should be understood that, when indicating the position of the another viewpoint other than the viewpoint corresponding to the metadata information, the viewpoint position information may be applicable to the scenario shown in FIG. 1. In other words, when there is an overlapping part between viewports of shooting videos between different viewpoints, viewpoint position information indicating a position of another viewpoint at a current position of a viewpoint may be carried in metadata information corresponding to media data of one viewpoint.

For example, there is a viewpoint 1 and a viewpoint 2 during video shooting. Viewpoint position information included in metadata information of the viewpoint 1 may also be a position of the viewpoint 2 in a sphere region in which media data corresponding to the viewpoint 1 is located.

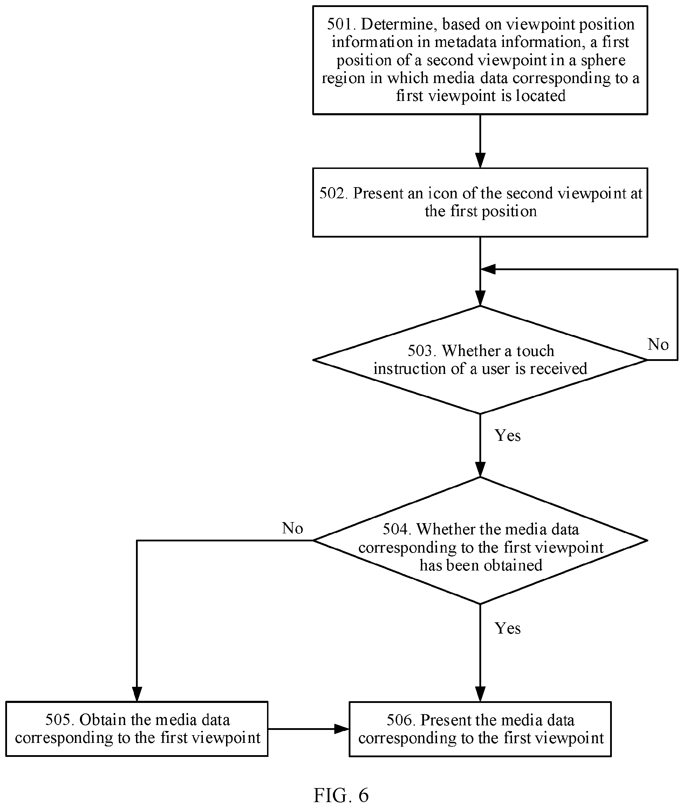

FIG. 6 is a flowchart of a media data processing method according to an embodiment of this application. Specifically, specific steps in the method shown in FIG. 6 may be considered as a continuation after the step 306 of the method shown in FIG. 4. After the media data corresponding to the first viewpoint is presented, an icon of another viewpoint may be presented at a position at which the media data of the first viewpoint is located based on viewpoint position information, so that the user can freely switch from the first viewpoint to the another viewpoint. The method shown in FIG. 6 specifically includes steps 501 to 506. The following describes steps 501 to 506 in detail.

501. Determine, based on the viewpoint position information, a first position of a second viewpoint in a sphere region in which the media data corresponding to the first viewpoint is located.

The viewpoint position information may be carried in the metadata information. Before the step 501, the viewpoint position information may be first obtained from the metadata information.

It should be understood that, in the method shown in FIG. 5, the viewpoint position information specifically indicates a position of the second viewpoint in the sphere region in which the media data corresponding to the first viewpoint is located. The second position may be located in an overlapping region between the first viewpoint and the second viewpoint.

502. Present an icon of the second viewpoint at the first position.

Specifically, the client may present the icon of the second viewpoint at the first position in the presented video at the first viewpoint. The user may switch from the first viewpoint to the second viewpoint by tapping the icon of the second viewpoint. The tapping operation of the user herein is a viewpoint switching instruction.

503. Determine whether the viewpoint switching instruction of the user is received.

After receiving the viewpoint switching instruction of the user, the client performs step 504; otherwise, the client continues to wait.

504. Determine whether media data corresponding to the second viewpoint has been obtained.

It should be understood that, that the media data corresponding to the second viewpoint has been obtained may mean that the client has downloaded the media data corresponding to the second viewpoint locally. That the media data corresponding to the second viewpoint has not been obtained may mean that the client obtains only metadata information of the media data corresponding to the second viewpoint, but has not stored the media data corresponding to the second viewpoint locally. In this case, the client needs to continuously obtain the media data corresponding to the second viewpoint from the server end.

When it is determined in the step 504 that the media data corresponding to the second viewpoint has been obtained, step 506 is directly performed. However, if it is determined in the step 504 that the media data corresponding to the second viewpoint has not been obtained, the media data corresponding to the second viewpoint needs to be obtained first, and then the data is presented, that is, step 505 is first performed, and then step 506 is performed.

505. Obtain the media data corresponding to the second viewpoint.

Specifically, when the media data corresponding to the second viewpoint is obtained, a bitstream of the media data corresponding to the second viewpoint may be obtained from the server end based on the metadata information of the media data corresponding to the second viewpoint, and the bitstream of the media data corresponding to the second viewpoint is parsed, so that the media data corresponding to the second viewpoint is obtained.

506. Present the media data corresponding to the second viewpoint.

Optionally, the viewpoint position information may be carried in a timed metadata track, box information, the MPD, and the SEI. The box information herein may be specifically a box (box).

The viewpoint position information is carried on the timed metadata track, to indicate a scenario in which a viewpoint position changes.

When the viewpoint position information is carried in the timed metadata track, the obtaining metadata information may specifically include: obtaining the timed metadata track, where the timed metadata track includes the viewpoint position information.

When the viewpoint position information is carried in the box information, the obtaining metadata information may specifically include: obtaining the box information, where the box information includes the viewpoint position information.

When the viewpoint position information is carried in the MPD, the obtaining metadata information may specifically include: obtaining the MPD, where the MPD includes the viewpoint position information.

When the viewpoint position information is carried in the SEI, the obtaining metadata information may specifically include: obtaining the SEI, where the SEI includes the viewpoint position information.

Because the timed metadata track, the box information, the MPD, and the SEI include the viewpoint position information, the viewpoint can be determined by parsing the metadata track, the MPD, and the SEI.

The following describes in detail, with reference to examples 4 to 7, that the viewpoint identification information is separately carried in the timed metadata track, the box information, the MPD, and the SEI.

Example 4: Viewpoint identification information is carried in a timed metadata track (timed metadata track).

In an application scenario of a multi-viewpoint 360-degree panoramic video, a case in which one or more other viewpoints are watched in a video at one viewpoint may occur. Therefore, in addition to the viewpoint identification information, metadata information may further carry viewpoint position information that is used to describe position information of another viewpoint in a sphere region of a current viewpoint. Specifically, sphere region information of the another viewpoint being at the current viewpoint may be described by using a timed metadata track that is associated with the current viewpoint. In this way, when watching a video at a specific viewpoint, a user may watch another viewpoint, and switch to the another viewpoint by clicking a sphere region of the viewpoint. It should be understood that the position information of the viewpoint in the sphere region described by using the timed metadata track can support a scenario in which the viewpoint position changes.

Similar to example 1, in example 4, a group type may also be newly added to indicate that tracks (track) with a same ID belong to a same viewpoint. Syntax for the newly added group type is as follows:
aligned(8) class ViewPositionGroupBox extends TrackGroupTypeBox('vipo') { }

To describe the position information of the another viewpoint in the sphere region of the current viewpoint, viewpoint identification information of the another viewpoint requires to be associated in the sphere region of the current viewpoint. To support an association of the viewpoint identification information (track group id) of the another viewpoint in the sphere region, a format of a sample entry (Sample Entry) in a newly defined timed metadata track is as follows:
Class AlternativeViewPositionEntry extends SphereRegionSampleEntry('ALVP',0,0) { }

A format of a sample in the newly defined timed metadata track is as follows:

```
           Aligned(8) AlternativeViewPositionSample( )
           {
              Unsigned int(32) num_view_position;
              For(i=0;i<num_view_position;i++)
              {
               Unsigned int(32) track_group_id;
                   For(i=0; i< num_regions; i++)
                  {
                    SphereRegionStruct(dynamic_range_flag);
                  }
              }
           }
```

Semantics of fields in the foregoing sample are as follows:
num_view_position indicates a quantity of viewpoints (a value of num_view_position is the specific quantity of viewpoints minus one);
track_group_id indicates an ID of the another viewpoint; and
sphereRegionStruct indicates a position of the another viewpoint in the sphere region of the current viewpoint.

As another possible implementation, the format of the sample entry in the timed metadata track is as follows:

```
           Class AlternativeViewPositionEntry extends
           SphereRegionSampleEntry('ALVP', 0,0)
           {
          Unsigned int(32) num_view_position;
           }
```

As another possible implementation, the format of the sample in the timed metadata track is as follows:

```
           Aligned(8) AlternativeViewPositionSample()
           {
              For(i=0;i<num_view_position;i++)
               {
                  Unsigned int(32) track_group_id;
                    For(i=0; i< num_regions; i++)
                   {
                    SphereRegionStruct(dynamic_range_flag);
                   }
               }
           }
```

In example 4, after a client obtains a video bitstream, a specific processing procedure is as follows:
(1) The client obtains a video data track (track) stream.
(2) The client searches the video data track stream for and parses TrackGroupTypeBox whose type is 'vipo'.
(3) When there is TrackGroupTypeBox whose type is 'vipo' in the video data track stream, track_group_id of TrackGroupTypeBox is obtained from TrackGroupTypeBox (that is, the viewpoint identification information is obtained from TrackGroupTypeBox).
(4) The client obtains a timed metadata track.
(5) The client searches for and parses, from the timed metadata track, a timed metadata track whose sample entry type is 'ALVP'.
(6) The client obtains, from a sample in the timed metadata track whose type is 'ALVP', track_group_id of the another viewpoint (there may be one or more other viewpoints) and a position of the another viewpoint in the sphere region of the current viewpoint.
(7) The client presents a video at the specific viewpoint, and presents, in the video at the presented viewpoint, the position of another viewpoint in a sphere region of the video at the current viewpoint and information (such as a viewpoint ID) of the another viewpoint.

It should be understood that when the client presents the video at the specific viewpoint, the user may tap the another viewpoint in the sphere region of the video at the viewpoint at any time, to switch to a video at the another viewpoint.

Optionally, in example 4, it is assumed that there are a plurality of viewpoints associated with the video at the current viewpoint, the timed metadata track may include viewpoint position information of the plurality of viewpoints, or the timed metadata track may include only the viewpoint position information of one of the plurality of viewpoints.

When the timed metadata track includes only the viewpoint position information of one viewpoint, the position information of the plurality of viewpoints may be carried in a plurality of timed metadata tracks.

When the timed metadata track includes the viewpoint position information of the plurality of viewpoints, a format of a corresponding sample entry is as follows:
Class AlternativeViewPositionEntry extends SphereRegionSampleEntry('ALVP',0,0) { }

When the timed metadata track includes the viewpoint position information of the plurality of viewpoints, a format of a corresponding sample is as follows:

```
           Aligned(8) AlternativeViewPositionSample( )
           {
               Unsigned int(32) track_group _id;
               {
                   For(i=0; i< num_regions; i++)
                   {
                    SphereRegionStruct(dynamic_range_flag);
                   }
               }
           }
```

In addition, the format of the sample entry in the timed metadata track may not be inherited to SphereRegionSampleEntry, but the new format of the sample entry and the format of the sample are redefined. A redefined format of a sample entry is as follows:

```
           Class AlternativeViewPositionEntry extends
           MetaDataSampleEntry('ALVP', 0,0)
           {
           }Unsigned int(8) num _view_position;
           A redefined format of a sample is as follows:
           Aligned(8) AlternativeViewPositionSample( )
           {
             For(i=0; i< num_view_position; i++)
             {
               Unsigned int(32) track_group_id;
               Signed int(32) center_azimuth;
               Signed int(32) center_elevation;
             }
           }
```

Semantics of the foregoing fields are as follows:
num_view_position indicates a quantity of viewpoints (a value of num_view_position is the specific quantity of viewpoints minus one);
track_group_id indicates an ID of the another viewpoint; and
center_azimuth and center_elevation indicate a position of a center point of the region (that is, a position of the another viewpoint in the sphere region of the current viewpoint).

When the timed metadata track includes only the viewpoint position information of one of the plurality of viewpoints, a format of a corresponding sample entry is as follows:
Class AlternativeViewPositionEntry extends MetaDataSampleEntry('ALVP',0,0) { }

When the timed metadata track includes only the viewpoint position information of one of the plurality of viewpoints, a format of a corresponding sample is as follows:

```
           Aligned(8) AlternativeViewPositionSample( )
           {
               Unsigned int(32) track_group_id;
               Signed int(32) center_azimuth;
               Signed int(32) center_elevation;
           }
```

In example 4, when the user watches the video at the current viewpoint, viewpoint information of the another viewpoint and the position of the another viewpoint in the region of the video at the current viewpoint can be further presented based on the viewpoint position information, so that the user can conveniently switch to the video at the another viewpoint to watch.

In example 4, the position information of the viewpoint in the sphere region described by using the timed metadata track can support a scenario in which a viewpoint position changes. For an application scenario in which the viewpoint position is fixed, a box used to describe the viewpoint position information of the another viewpoint may be newly added to a viewpoint video stream track. In this way, when watching the video at the specific viewpoint, the user can watch the another viewpoint, and switch to the another viewpoint by clicking the sphere region (the position of the another viewpoint of the video at the current viewpoint) corresponding to the viewpoint.

The following describes in detail, with reference to example 5, an implementation in which the box is newly added to the viewpoint video stream track to describe the viewpoint position information of the another viewpoint in the scenario in which the viewpoint position is fixed.

Example 5: Viewpoint position information is carried in box information.

In example 5, a new group type is newly added to indicate that tracks with a same ID in the group type belong to a same viewpoint. The newly added group type is defined as follows:
aligned(8) class ViewPositionGroupBox extends TrackGroupTypeBox('vipo') { }

A metadata box (equivalent to the foregoing box information) in the video stream track is used to carry the viewpoint position information of another viewpoint at a current viewpoint, and a specific definition is as follows:

```
           Aligned(8) class AlternativeViewPositionBox extends FullBox('avpb',0,0)
           {
               Unsigned int(32) num_view_position;
                  For(i=0;i<num_view_position;i++)
                  {
                    Unsigned int(32) track_group_id;
                    Signed int(32) center_azimuth;
                    Signed int(32) center_elevation;
                  }
           }
```

Semantics of fields in the foregoing metadata box are as follows:
num_view_position indicates a quantity of viewpoints (a value of num_view_position is the specific quantity of viewpoints minus one);
track_group_id indicates an ID of the another viewpoint; and
center_azimuth and center_elevation indicate a position of a center point of the region (that is, a position of the another viewpoint in the sphere region of the current viewpoint).

In example 5, after a client obtains a video bitstream, a specific processing procedure is as follows:
(1) The client obtains a video data track (track) stream.
(2) The client searches the video data track stream for and parses TrackGroupTypeBox whose type is 'vipo'.
(3) When there is TrackGroupTypeBox whose type is 'vipo' in the video data track stream, track_group_id of TrackGroupTypeBox is obtained from TrackGroupTypeBox (that is, the viewpoint identification information is obtained from TrackGroupTypeBox).
(4) The client searches the video data track stream for and parses a box whose type is 'avpb'.
(5) The client obtains, from the box whose type is 'avpb', track_group_id of one or more other viewpoints in sample data of the box whose type is 'avpb' and positions of sphere regions at the one or more other viewpoints.
(6) The client presents a video at a specific viewpoint, and presents, in the video at the viewpoint, a position of another viewpoint in a sphere region of the video at the viewpoint and information of the another viewpoint.

It should be understood that when the client presents the video at the specific viewpoint, the user may tap the another viewpoint in the sphere region of the video at the viewpoint at any time, to switch to a video at the another viewpoint.

In example 5, the box whose type is 'avpb' may be defined by using a SphereRegionStruct sphere region struct in an existing OMAF, and a specific definition is as follows:

```
           Aligned(8) class AlternativeViewPositionBox extends FullBox('avpb',0,0)
           {
               Unsigned int(32) num_view_position;
                  For(i=0;i<num_view_position;i++)
                  {
                    Unsigned int(32) track_group_id;
                    Unsigned int(8) num_regions;
                      For(i=0;i<num_regions;i++)
                       {
                          SphereRegion Struct(dynamic_range_flag);
                       }
                  }
           }
```

The following describes in detail, with reference to example 6, a case in which the viewpoint identification information and the viewpoint position information are carried in the MPD.

Example 6: Viewpoint position information is carried in an MPD.

In addition to the viewpoint position information, viewpoint identification information may be further carried in the MPD. This is the same as example 2. When the viewpoint identification information is carried in the MPD, a property @viewPositionSetId may also be added to an adaptation set level of the MPD to indicate a viewpoint to which the adaptation set belongs. A specific meaning of @viewPositionSetId may be shown in the Table 1.

In addition, a source information descriptor may be further added to a standard element SupplementalProperty specified in the ISO/IEC 23009-1, and "urn:mpeg:omaf:alvp:2017" indicates a value of @schemeIdUri, indicating that the supplemental property describes an alternative viewpoint, and a definition of a specific value of the supplemental property is shown in Table 2.

**Table 2**

| @value parameter for ALVP descriptor | Use (Use) | Description (Description) |
|---|---|---|
| View_position_id | M | Indicates an ID of an alternative viewpoint (Specifies the alternative view position id) |
| center_azimuth | O | Specify an azimuth relative to a center point of a sphere region in degrees on a global coordinate axis. When not present, center_azimuth is inferred to be equal to 0 (Specifies the azimuth of the center point of the sphere region in degrees relative to the global coordinate axes. When not present, center_azimuth is inferred to be equal to 0) |
| center_elevation | O | Specify an elevation relative to a center point of a sphere region in degrees on a global coordinate axis. When not present, center_elevation is inferred to be equal to 0 (Specifies the elevation of the center point of the sphere region in degrees relative to the global coordinate axes. When not present, center_elevation |
| | | is inferred to be equal to 0) |

Semantics of fields in the Table 2 are as follows:
View_position_id indicates the ID of the alternative viewpoint (that is, an ID of another viewpoint other than a current viewpoint). A value of View_position_id needs to be the same as a value of @viewPositionSetId in the adaptation set; and
center_azimuth and center_elevation indicate a position of the another viewpoint at a center point of a sphere region of a video at the current viewpoint.

In addition, in Table 2, M indicates that the field is mandatory or must exist, and O indicates that the field is optional.

In a scenario of a plurality of viewpoints, a plurality of ALVP descriptors may be used to describe information of a plurality of alternative viewpoints. In a possible implementation, an example of the MPD is as follows:

```
           <?xml version="1.0" encoding="UTF-8"?>
           <MPD
             xmlns="urn:mpeg:dash:schema:mpd:2011"
             type=" static"
             mediaPresentationDuration="PT10S"
             minBufferTime="PT1S"
             profiles="urn:mpeg:dash:profile:isoff-on-demand:2011">
             <Period>
               <!-viewPosition 1, Tile 1 -->
               <AdaptationSet segmentAlignment="true"
 subsegmentAlignment="true" subsegmentStartsWithSAP="1" viewPositionSetId = "1">
           <SupplementalProperty schemeIdUri="urn:mpeg:omaf:alvp:2017"
 value="2,-135,-45"/>
                  <EssentialProperty schemeIdUri="urn:mpeg:dash:srd:2014"
 value="0,0,0,960,1080,3840,2160"/>
                  <Representation mimeType="video/mp4" codecs="avc1.42c00d"
 width="960" height=" 1080" bandwidth="79707" startWithSAP="1">
                    <EssentialProperty schemeIdUri="urn:mpeg:mpegB:cicp:PF"
 value="0"/>
                    <BaseURL> tile1.mp4</BaseURL>
                    <SegmentBase indexRangeExact="true" indexRange="837-
 988"/>
                  </Representation>
               </AdaptationSet>
               <!-- viewPosition 1,Tile 2 -->
               <AdaptationSet segmentAlignment="true"
 subsegmentAlignment="true" subsegmentStartsWithSAP="1" viewPositionSetId = "1">
               <SupplementalProperty schemeIdUri="urn:mpeg:omaf:alvp:2017"
 value="2,-135,-45"/>
           <EssentialProperty schemeIdUri="urn:mpeg:dash:srd:2014"
 value="0,960,0,960,1080,3840,2160"/>
                  <Representation mimeType="video/mp4" codecs="avc1.42c00d"
 width="640" height="720" bandwidth="79707" startWithSAP="1">
                    <EssentialProperty schemeIdUri="urn:mpeg:mpegB:cicp:PF"
 value="0"/>
                    <BaseURL> tile2.mp4</BaseURL>
                    <SegmentBase indexRangeExact="true" indexRange="837-
 988"/>
                  </Representation>
               </AdaptationSet>
               <!-viewPosition 2, Tile 1 -->
               <AdaptationSet segmentAlignment="true"
 subsegmentAlignment="true" subsegmentStartsWithSAP="1" viewPositionSetId = "2">
               <SupplementalProperty schemeIdUri="urn:mpeg:omaf:alvp:2017"
 value="1,135,45"/>
               <EssentialProperty schemeIdUri="urn:mpeg:dash:srd:2014"
 value="0,0,0,960,1080,3840,2160"/>
                  <Representation mimeType="video/mp4" codecs="avc1.42c00d"
 width="960" height=" 1080" bandwidth="79707" startWithSAP="1">
                    <EssentialProperty schemeIdUri="urn:mpeg:mpegB:cicp:PF"
 value="0"/>
                    <BaseURL> tile1.mp4</BaseURL>
                    <SegmentBase indexRangeExact="true" indexRange="837-
 988"/>
                  </Representation>
               </AdaptationSet>
               <!-- viewPosition 2,Tile 2 -->
               <AdaptationSet segmentAlignment="true"
 subsegmentAlignment="true" subsegmentStartsWithSAP="1" viewPositionSetId = "2">
               <SupplementalProperty schemeIdUri="urn:mpeg:omaf:alvp:2017"
 value="1,13 5,45"/>
           <EssentialProperty schemeIdUri="urn: mpeg: dash: srd:2014"
 value="0,960,0,960,1080,3840,2160"/>
                  <Representation mimeType="video/mp4" codecs="avc1.42c00d"
 width="640" height="720" bandwidth="79707" startWithSAP="1">
                    <EssentialProperty schemeIdUri="urn:mpeg:mpegB:cicp:PF"
 value="0"/>
                    <BaseURL> tile2.mp4</BaseURL>
                    <SegmentBase indexRangeExact="true" indexRange="837-
 988"/>
                  </Representation>
               </AdaptationSet>
             </Period>
           </MPD>
```

In the foregoing syntax included in the MPD, when viewPositionSetId is equal to "1", a viewpoint 1 is indicated, and when viewPositionSetId is equal to "2", a viewpoint 2 is indicated. The viewpoint 1 and the viewpoint 2 each have two tracks (tile 1 and tile 2).
<SupplementalProperty schemeIdUri="urn:mpeg:omaf:alvp:2017" value="2,-135,-45"/> indicates the ID of the alternative viewpoint and position information of the another viewpoint in the sphere region.

After a client obtains a video stream, a specific processing procedure is as follows:
(1). The client obtains the MPD file, and parses a property at an adaptation set level to obtain a value of the viewPositionSetId property.
(2) The client parses the SupplementalProperty property in the adaptation set to obtain the ID of the another viewpoint and sphere region information of the another viewpoint.
(3) When a user watches a video at a specific viewpoint, the client presents a sphere region of another viewpoint of a video at the viewpoint and information of the another viewpoint, and the user may click the region at any time to switch to different viewpoints for watching.

In example 6, View_position_id, center_azimuth, and center_elevation are defined by using SupplementalProperty whose type is 'ALVP'. center_azimuth and center_elevation may indicate center points of the sphere region. Further, in example 6, some extensions may be performed to indicate a coverage range of the sphere region. A specific definition of the coverage range of the sphere region is shown in Table 3.

**Table 3**

| @value parameter for ALVP descriptor | Use (Use) | Description (Description) |
|---|---|---|
| View_position_id | M | Indicates an ID of an alternative viewpoint (Specifies the alternative view position id) |
| shape_type | O | Specify a shape type of a sphere region. When not present, shape_type is inferred to be equal to 0 (Specifies the shape type of the sphere region, When not present, shape_type is inferred to be equal to 0) |
| center_azimuth | O | Specify an azimuth relative to a center point of a sphere region in degrees on a global coordinate axis. When not present, center_azimuth is inferred to be equal to 0 (Specifies the azimuth of the center point of the sphere region in degrees relative to the global coordinate axes. When not present, center_azimuth is inferred to be equal to 0) |
| center_elevation | O | Specify an elevation relative to a center point of a sphere region in degrees on a global coordinate axis. When not present, center_elevation is inferred to be equal to 0 (Specifies the elevation of the center point of the sphere region in degrees relative to the global coordinate axes. When not present, center_elevation is inferred to be equal to 0) |
| center_tilt | O | Specify a tilt angle relative to a sphere region in degrees on a global coordinate axis. When not present, center_tilt is inferred to be equal to 0 (Specifies the tilt angle of the sphere region, in degrees, relative to the global coordinate axes. When not present, center_tilt is inferred to be equal to 0) |
| azimuth _range | O | Specify a horizontal range of a sphere region that passes through a center point of the sphere region. When not present, azimuth_ range is inferred to be equal to 360 ^{∗} 216 (Specifies the horizontal range of the sphere region through the center point of the coverage sphere region. When not present azimuth_range is inferred to be equal to 360 ^{∗} 216) |
| elevation _range | O | Specify a vertical range of a sphere region that passes through a center point of the sphere region. When not present, elevation range is inferred to be equal to 180 ^{∗} 216 (Specifies the vertical range of the sphere region through the center point of the coverage sphere region. When not present elevation_ range is inferred to be equal to 180 ^{∗} 216) |

Semantics of fields in the syntax in the foregoing Table 3 are as follows:
View_position_id indicates the ID of the another viewpoint;
shape_type indicates a form in which the sphere region is formed, including a region that four large spheres intersect to form, and a region that two large spheres and two small spheres intersect to form on a spherical surface; and
center_azimuth, center_elevation, center_tilt, azimuth_range, and elevation range are specifically used to indicate a position of the another viewpoint in the sphere region of the video at the current viewpoint, where
center_azimuth and center_elevation indicate a position of a center point of the region in which the another viewpoint is located; center_tilt indicates a tilt angle of the center point in the region in which the another viewpoint is located; azimuth_range indicates an azimuth coverage range of the region in which the another viewpoint is located; and elevation_range indicates an elevation coverage range of the region in which the another viewpoint is located.

Example 7: Viewpoint position information is carried in an SEI.

In addition to viewpoint identification information, the viewpoint position information may be further carried in the SEI. This is the same as example 2. In example 7, syntax for the viewpoint identification information carried in the SEI is specifically as follows:

```
           sei_payload(payloadType, payloadSize)
           {
                  if( payloadType = = VIP)
                  View_position_payload(payloadSize)
           }
```

VIP in the foregoing syntax is a specific value. For example, when VIP is 190, it indicates that the viewpoint identification information is carried in a source_payload field in the SEI. Syntax included in source_payload is specifically as follows:

```
           source_payload(payloadSize)
           {
           View_position_id
           }
```

View_position_id describes information about a viewpoint ID to which a bitstream corresponding to the SEI belongs.

In addition, it should be understood that a value of VIP is not limited in this application. When set to a specific value, VIP may be used to indicate that the viewpoint identification information in carried in the source_payload field in the SEI.

Optionally, the viewpoint position information may also be carried in the SEI. Specifically, the viewpoint position information herein may include ID information of another viewpoint and position information of the another viewpoint in a sphere region in which a video at a current viewpoint is located. Syntax for the viewpoint position information carried in the SEI is specifically as follows:

```
           sei_payload(payloadType, payloadSize)
           {
          if(payloadType = = ALV)
                    alterviewposition_payload(payloadSize)
           }
```

ALV in the syntax indicates a specific value. For example, when ALV is 191, ALV indicates that the viewpoint position information is carried in the SEI. When a payload type in the SEI is ALV, syntax in the SEI is specifically as follows:

```
           source_payload(payloadSize)
           {
               Num_view_position
               For(i=0;i<num_view_position;i++)
                 {
                    View_position_id
                    center_azimuth
                    center_elevation
                 }
           }
```

Semantics of all syntax are as follows:
Num_view_position indicates that there are a plurality of other viewpoints;
View_position_id indicates the ID of the another viewpoint; and
center_azimuth and center_elevation indicate a position of the another viewpoint at a center point of a sphere region of a video at the current viewpoint.

In example 7, after a client obtains a video bitstream, a specific processing procedure is as follows:
(1) The client obtains the bitstream, and parses NALU header information in the bitstream.
(2) If a header information type obtained by the client through parsing is an SEI type, the client continues to parse an SEI NALU to obtain a payload type of the SEI.
(3) If the payload type obtained by the client through parsing is 190, this indicates that bitstream viewpoint information is carried in the SEI.
(4) The client continues to parse the bitstream to obtain view_position_id information and obtain a viewpoint ID.
(5) If the payload type obtained by the client through parsing is 191, this indicates that the SEI carries information of the another viewpoint and a position of the another viewpoint in the sphere region of the video at the current viewpoint.
(6) The client presents a video at a specific viewpoint to a user, and presents another viewpoint and a position of the another viewpoint in a sphere region of a video at the current viewpoint.

In example 7, when the client presents the video at the specific viewpoint, the user may tap the another viewpoint in the sphere region of the video at the viewpoint at any time, to switch to a video at the another viewpoint.

In example 7, viewpoint identification information of the another viewpoint and position information of the another viewpoint in the sphere region of the video at the current viewpoint are defined based on ALV SEI information. Further, in example 7, some extensions may be further performed to indicate a coverage range of the sphere region. Specific definitions are as follows:

```
           source_payload(payloadSize)
           {
               Num_view_position
               For(i=0;i<num_view_position;i++)
               {
                    View_position_id
                    shape_type
                    center_azimuth
                    center_elevation
                    center_tilt
                    azimuth_range
                    elevation_range
               }
           }
```

Meanings of the foregoing syntax are as follows:
View_position_id indicates the ID of the another viewpoint;
shape_type indicates a form in which the sphere region is formed, including a region that four large spheres intersect to form, and a region that two large spheres and two small spheres intersect to form on a spherical surface; and
center_azimuth, center_elevation, center_tilt, azimuth_range, and elevation_range are specifically used to indicate the position of the another viewpoint in the sphere region of the video at the current viewpoint, where
center_azimuth and center_elevation indicate a position of a center point of the region in which the another viewpoint is located; center_tilt indicates a tilt angle of the center point in the region in which the another viewpoint is located; azimuth_range indicates an azimuth coverage range of the region in which the another viewpoint is located; and elevation_range indicates an elevation coverage range of the region in which the another viewpoint is located.

It should be understood that, in the example 4 to example 7, the viewpoint position information specifically includes the viewpoint identification information of the another viewpoint and the position of the another viewpoint in the sphere region in which the video of the current viewpoint is located. The viewpoint identification information of the another viewpoint may also be indicated by using track_group_id, and the position of the another viewpoint in the sphere region in which the video of the current viewpoint is located may be represented by using SphereRegionStruct.

Optionally, in an embodiment, the obtaining metadata information includes: obtaining the metadata track, where viewpoint identification information and director viewport information are carried in the metadata track; and the processing the media data based on the viewpoint identification information includes: processing the media data based on the viewpoint identification information and the director viewport information.

The director viewport information may indicate a viewport recommended by a video producer or a director. A client may present, to a user based on the director viewport information, media content that the video producer or the director wants to present to the user. Because the metadata track further includes the viewpoint identification information, the client may present video content of at least one viewpoint within a director viewport range to the user, so that the user can select a video at one viewpoint from the at least one viewpoint within the director viewport range to watch.

In this application, because the metadata track further includes the viewpoint identification information in addition to the director viewport information, the user can select a video at a corresponding viewpoint within the director viewport range to watch. In this application, the user can perform free switching between different viewpoints within the director viewport range.

The following describes in detail, with reference to example 8, a case in which both the viewpoint identification information and the director viewport information are carried in the metadata track.

Example 8: Viewpoint identification information and director viewport information are carried in a metadata track.

Example 8 is an application scenario in which a director viewport stream exists. In this scenario, a user does not watch a video by using a viewport and a viewpoint that are selected by the user, but watches the video by using a viewport and a viewpoint that are designed or recommended by a director or a video producer in advance.

A syntax format of the director viewport stream is defined in an existing OMAF standard. Specifically, a syntax format that is of a sample entry (sample entry) and that is defined when the viewport (that is, a sphere region) recommended by the director to the user is described by using a timed metadata track is as follows:

```
           Class RcvpSampleEntry( ) extends SphereRegionSampleEntry('rcvp')
           {
              RcvpInfoBox( );
           }
           Class RcvpInfoBox extends FullBox('rvif, version=0,flags)
           {
             Unsigned int(8) viewport_type;
             String viewport_description;
           }
```

SphereRegionSampleEntry indicates a position type of the sphere region, and viewport_type indicates that a director viewport is defined in the sample.

A corresponding sample format is as follows:

```
           Aligned(8) SphereRegionStruct(range_included _flag)
           {
              Signed int(32) center_azimuth;
              Signed int(32) center_elevation;
              Signed int(32) center_tilt;
              If(range_included_flag)
              {
               Unsigned int(32) azimuth_range;
               Unsigned int(32) elevation_range;
              }
              Unsigned int(1) interpolate;
              Bit(7) reserved=0;
           }
           Aligned(8) SphereRegionSample ()
           {
               For(i=0; i< num_regions ; i++)
               SphereRegion Struct(dynamic_range_flag)
           }
```

In example 8, a new group type is newly added to indicate that tracks with a same ID in the group type belong to a same viewpoint. The newly added group type is defined as follows:
aligned(8) class ViewPositionGroupBox extends TrackGroupTypeBox('vipo') { }

In example 8, the timed metadata track is used to describe the viewpoint and the viewport that are recommended by the director to the user for watching. The sample entry is still defined by using an original type 'rcvp' of the director-recommended viewport stream in the OMAF. A sample format is defined as follows:

```
           Aligned(8) SphereRegionSample( )
           {
          unsigned int(1) multiple_position_presence_flag;
          bit(7) reserved = 0;
              if(multiple_position_presence_flag == 1)
              {
              unsigned int(32) track_group_id;
              }
                  For(i=0; i< num_regions; i++)
                 {
                  SphereRegion Struct(dynamic_range_flag)
                 }
           }
```

Semantics of the foregoing syntax is as follows:
multiple_position_presence_flag indicates whether there are a plurality of viewpoints in the director-recommended viewport stream; and
track_group_id indicates a viewpoint ID in the director-recommended viewport stream when there are the plurality of viewpoints in the director viewport stream.

In example 8, after a client obtains a video bitstream, a specific processing procedure is as follows:
(1) The client obtains a video data track (track) stream.
(2) The client searches the video data track stream for and parses TrackGroupTypeBox whose type is 'vipo'.
(3) When there is TrackGroupTypeBox whose type is 'vipo' in the video data track stream, track_group_id is obtained from TrackGroupTypeBox.
(4) The client obtains, from the bitstream, a timed metadata track whose type is 'rcvp'.
(5). If multiple_position_presence_flag in sample data of the timed metadata track is 1, the client obtains track_group id of another viewpoint and a sphere region recommended for watching by the timed metadata track.
(6) The client presents recommended videos of different viewpoints to the user based on information in the timed metadata track.

In the process (2), when obtaining TrackGroupTypeBox whose type is 'vipo' through parsing, the client determines that the viewpoint identification information is carried in the timed metadata track. Then the client needs to obtain the viewpoint identification information.

In the process (3), when obtaining the timed metadata track whose type is 'rcvp' through parsing, the client determines that the director viewport information is carried in the timed metadata track. Then, the director viewport information needs to be obtained.

In this embodiment of this application, the viewpoint identification information may be specifically used to indicate the viewpoint ID, and the like. In the example 1 to example 8, track_group_id may be considered as a specific implementation form of the viewpoint identification information, and track_group_id may be specifically used to indicate the viewpoint ID.

In a design of an omnidirectional media format, a plurality of tracks (track) are usually used to carry different parts of omnidirectional content. Therefore, in a multi-viewpoint scenario, if all rails are mixed in a current design, it is difficult to distinguish a video track that is from one viewing position to another viewing position.

To distinguish video tracks corresponding to different viewing positions, a track grouping mechanism may be used to group video tracks that belong to a same viewing position. If the video tracks belong to the same viewing position, the video tracks have a same track group ID. In addition, a track group ID corresponding to one viewing position is different from a track group ID corresponding to another viewing position. When there is no ViewPositionGroupBox in all video tracks, this means that all video tracks are corresponding to one viewing position.

In this application, the viewpoint identification information may be defined by using the following syntax. Syntax content is specifically as follows:

```
          aligned(8) class ViewPositionGroupBox extends
TrackGroupTypeBox('vipo') { }
```

Semantics of the foregoing syntax is as follows: Tracks, in TrackGroupTypeBox, with a same track_group_id value and track_group_type value being "vipo" belong to the same viewing position (Tracks that have the same value of track_group_id within TrackGroupTypeBox with track_group_type equal to 'vipo' belong to the same viewing position).

In addition, in this application, an ID of the another viewpoint and a position of the another viewpoint in a sphere region of a video at a current viewpoint may be further defined based on viewpoint position information. Specifically, a timed metadata track associated with a given viewing position group may be used to describe an optional viewing position and a spatial region of the optional viewing position on a spherical surface of the given viewing position.

To describe the viewpoint position information, syntax of a corresponding sample entry type 'ALVP' is defined as follows:

```
           Class AlternativeViewPositionEntry extends
 SphereRegionSampleEntry('ALVP')
           {
        Unsigned int(32) num_view_position;
       }
           num_view_position indicates a quantity of selectable viewing positions
 (num_view_position indicates number of alternative viewing positions). The viewing
 position herein is equivalent to the viewpoint.
```

To describe the viewpoint position information, an optional viewing position (equivalent to the viewpoint ID) and the spatial region of the optional viewing position on the spherical surface need to be defined in each sample. Specific definitions of sample syntax are as follows:

```
                  aligned(8) SphereRegionStruct(range_included_flag)
                  {
   signed int(32) center_azimuth;
   signed int(32) center_elevation;
   singed int(32) center_tilt;
       if (range included_flag)
                     {
  unsigned int(32) azimuth_range;
  unsigned int(32) elevation_range;
      }
     unsigned int(1) interpolate;
     bit(7) reserved = 0;
     }
               aligned(8) AlternativeViewPositionSample( )
               {
            For(i=0;i<num_view_position;i++)
              {
              Unsigned int(32) track_group_id;
               For(i=0; i< num_regions; i++)
                   {
                 SphereRegionStruct(dynamic_range_flag);
               }
                     }
               }
```

Semantics of fields in the foregoing sample are specifically as follows:
center_azimuth and center_elevation indicate a position of a center point of the region;
center_tilt indicates a tilt angle of the region;
azimuth_range indicates an azimuth coverage range of the region;
elevation range indicates an elevation coverage range of the region;
num_view_position indicates a quantity of viewpoints (a value of num_view_position is the specific quantity of viewpoints minus one);
track_group id indicates the ID of the another viewpoint; and
sphereRegionStruct indicates the position of the another viewpoint in the sphere region of the current viewpoint.

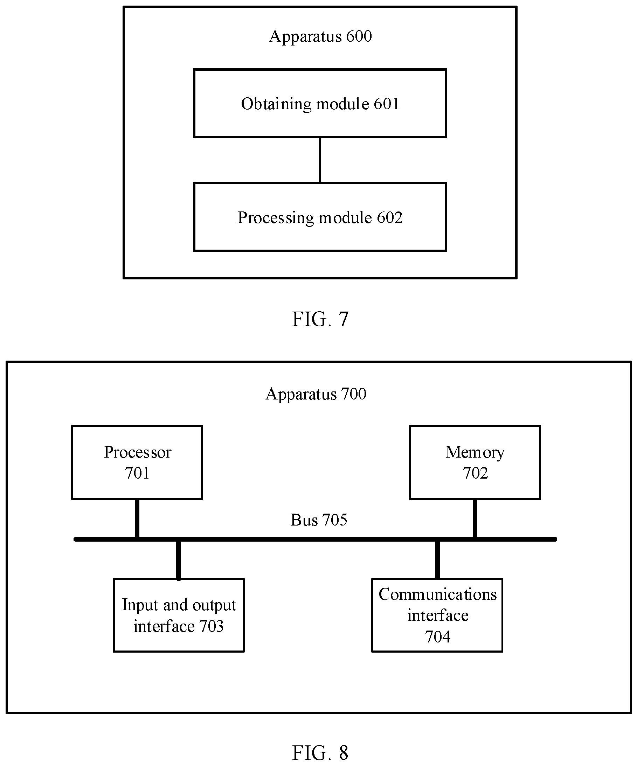

The foregoing describes in detail, with reference to FIG. 1 to FIG. 6, the media data processing method in the embodiments of this application. The following describes, with reference to FIG. 7 and FIG. 8, media data processing apparatuses in the embodiments of this application. It should be understood that, the media data processing apparatuses described in FIG. 7 and FIG. 8 can perform all steps of the media data processing method in FIG. 1 to FIG. 6. The foregoing limitations on all steps in FIG. 1 to FIG. 6 are also applicable to the apparatuses shown in FIG. 7 and FIG. 8. Therefore, when the apparatuses shown in FIG. 7 and FIG. 8 are described below, for brevity, repeated descriptions are properly omitted.

FIG. 7 is a schematic block diagram of a media data processing apparatus according to an embodiment of this application.

An apparatus 600 shown in FIG. 7 includes:
an obtaining module 601, configured to obtain metadata information, where the metadata information is property information that describes media data, and the metadata information includes viewpoint identification information; and
a processing module 602, configured to process the media data based on the viewpoint identification information.

In this application, because the metadata information carries the viewpoint identification information, media data corresponding to different viewpoints can be freely processed based on the viewpoint identification information in the metadata information.

FIG. 8 is a schematic structural diagram of hardware of a media data processing apparatus according to an embodiment of this application. An apparatus 700 shown in FIG. 8 may be considered as a computer device, and the apparatus 700 may be an implementation of the media data processing apparatuses in the embodiments of this application, or may be an implementation of the media data processing method in the embodiments of this application. The apparatus 700 includes a processor 701, a memory 702, an input and output interface 703, and a bus 705, and may further include a communications interface 704. Communications connections between the processor 701, the memory 702, the input and output interface 703, and the communications interface 704 are implemented by using the bus 705.

The processor 701 may be a general-purpose central processing unit (central processing unit, CPU), a microprocessor, an application-specific integrated circuit (application specific integrated circuit, ASIC), or one or more integrated circuits. The processor 701 is configured to execute a related program to implement functions that need to be executed by modules in the media data processing apparatus in the embodiments of this application, or to execute the media data processing method in the method embodiments of this application. The processor 701 may be an integrated circuit chip, and has a signal processing capability. In an implementation process, all steps in the foregoing method can be completed by using a hardware integrated logic circuit in the processor 701 or instructions in a form of software. The processor 701 may be a general-purpose processor, a digital signal processor (digital signal processing, DSP), an application-specific integrated circuit (ASIC), a field programmable gate array (field programmable gate array, FPGA), another programmable logic device, a discrete gate, a transistor logic device, or a discrete hardware component. The processor 701 may implement or perform the methods, the steps, and logic block diagrams that are disclosed in the embodiments of this application. The general-purpose processor may be a microprocessor, or the processor may be any conventional processor or the like. The steps of the methods disclosed with reference to the embodiments of this application may be directly performed and completed by using a hardware decoding processor, or may be performed and completed by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 702. The processor 701 reads information in the memory 702, and completes, in combination with hardware of the processor 702, the functions that need to be executed by the modules included in the media data processing apparatus in the embodiments of this application, or executes the media data processing method in the method embodiments of this application.

The memory 702 may be a read-only memory (read only memory, ROM), a static storage device, a dynamic storage device, or a random access memory (random access memory, RAM). The memory 702 may store an operating system and another application program. When software or firmware are used to implement the functions that need to be executed by the modules included in the media data processing apparatus in the embodiments of this application, or to execute the media data processing method in the method embodiments of this application, program code used to implement the technical solutions provided in the embodiments of this application is stored in the memory 702, and the processor 701 performs operations that need to be performed by the modules included in the media data processing apparatus, or performs the media data processing method provided in the method embodiments of this application.

The input and output interface 703 is configured to receive input data and information, and output data such as an operation result.

The communications interface 704 uses a transceiver apparatus, for example, but not limited to, a transceiver, to implement communication between the apparatus 700 and another device or another communications network. The communications interface 704 may be used as an obtaining module or a sending module in a processing apparatus.

The bus 705 may include a path for transmitting information between components (for example, the processor 701, the memory 702, the input and output interface 703, and the communications interface 704) of the apparatus 700.

It should be noted that, although only the processor 701, the memory 702, the input and output interface 703, the communications interface 704, and the bus 705 that are of the apparatus 700 are shown in FIG. 8, in a specific implementation process, a person skilled in the art should understand that the apparatus 700 further includes another device required for implementing normal running, for example, may further include a display that is configured to display to-be-played video data. In addition, based on a specific requirement, a person skilled in the art should understand that the apparatus 700 may further include a hardware device for implementing other additional functions. In addition, a person skilled in the art should understand that the apparatus 700 may include only devices required for implementing the embodiments of this application, but does not necessarily include all the devices shown in FIG. 8.

A person of ordinary skill in the art may be aware that, in combination with the examples described in the embodiments disclosed herein, units and algorithm steps may be implemented by electronic hardware or a combination of computer software and the electronic hardware. Whether the functions are executed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be another division in an actual implementation. For example, a plurality of units or components may be combined or integrated into another system, or some features may be ignored or not performed. In addition, the displayed or discussed mutual couplings, direct couplings, or communication connections may be implemented by using some interfaces. The indirect couplings or the communication connections between apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, a network device, or the like) to perform all or some of the steps of the method described in the embodiments of this application. The foregoing storage medium includes any medium that can store program code, such as a USB flash drive, a removable hard disk, a ROM, a RAM, a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A media data processing method, comprising:
obtaining metadata information, wherein the metadata information is property information that describes media data, and the metadata information comprises viewpoint identification information; and
processing the media data based on the viewpoint identification information.

2. The method according to claim 1, wherein the method further comprises:
obtaining viewpoint selection information; and
the processing the media data based on the viewpoint identification information comprises:
determining a first viewpoint based on the viewpoint selection information and the viewpoint identification information; and
processing media data corresponding to the first viewpoint.

3. The method according to claim 2, wherein the processing media data corresponding to the first viewpoint comprises:
presenting the media data corresponding to the first viewpoint.

4. The method according to claim 2, wherein before the processing media data corresponding to the first viewpoint, the method further comprises:
obtaining, based on the viewpoint identification information and the metadata information, the media data corresponding to the first viewpoint.

5. The method according to any one of claims 1 to 4, wherein the metadata information further comprises viewpoint position information, and the viewpoint position information is used to indicate a position of a viewpoint in a spherical coordinate system.

6. The method according to claim 5, wherein the metadata information comprises box information, and the box information comprises the viewpoint position information.

7. The method according to any one of claims 1 to 6, wherein the metadata information is a metadata track.

8. The method according to any one of claims 1 to 6, wherein the metadata information is a media presentation description.

9. The method according to any one of claims 1 to 6, wherein the metadata information is supplemental enhancement information.

10. The method according to claim 1, wherein the metadata information is a metadata track, and the metadata track further comprises director viewport information; and
the processing the media data based on the viewpoint identification information comprises:
processing the media data based on the viewpoint identification information and the director viewport information.

11. A media data processing apparatus, comprising:
an obtaining module, configured to obtain metadata information, wherein the metadata information is property information that describes media data, and the metadata information comprises viewpoint identification information; and
a processing module, configured to process the media data based on the viewpoint identification information.

12. The apparatus according to claim 11, wherein the obtaining module is further configured to obtain viewpoint selection information; and
the processing module is specifically configured to:
determine a first viewpoint based on the viewpoint selection information and the viewpoint identification information; and
process media data corresponding to the first viewpoint.

13. The apparatus according to claim 12, wherein the processing module is specifically configured to:
present the media data corresponding to the first viewpoint.

14. The apparatus according to claim 12, wherein before the processing module processes the media data corresponding to the first viewpoint, the processing module is further configured to:
obtain, based on the viewpoint identification information and the metadata information, the media data corresponding to the first viewpoint.

15. The apparatus according to any one of claims 11 to 14, wherein the metadata information further comprises viewpoint position information, and the viewpoint position information is used to indicate a position of a viewpoint in a spherical coordinate system.

16. The apparatus according to claim 15, wherein the metadata information comprises box information, and the box information comprises the viewpoint position information.

17. The apparatus according to any one of claims 11 to 16, wherein the metadata information is a metadata track.

18. The apparatus according to any one of claims 11 to 16, wherein the metadata information is a media presentation description.

19. The apparatus according to any one of claims 11 to 16, wherein the metadata information is supplemental enhancement information.

20. The apparatus according to claim 11, wherein the metadata information is a metadata track, and the metadata track further comprises director viewport information; and
the processing module is specifically configured to process the media data based on the viewpoint identification information and the director viewport information.
